# EUROPEAN PATENT APPLICATION

(11) **EP 4 549 482 A1**
(43) Date of publication of application: **07.05.2025**
(21) Application number: 23207065.6
(22) Date of filing: 31.10.2023
(51) Int. Cl.: C08G 18/24, C08G 18/32, C08G 18/42, C08G 18/48, C08G 18/72, C08G 18/75, C08G 18/79, C09J 175/08, C08K 3/22

(54) **THERMALLY CONDUCTIVE POLYURETHANE ADHESIVE COMPOSITION FOR BATTERIES IN ELECTRIC VEHICLES**

(71) Applicant: Henkel AG & Co. KGaA, 40589 Düsseldorf (DE)
(72) Inventor: Kelly, Elaine, 40239 Düsseldorf (DE); Leuschner, Tamara, 46049 Oberhausen (DE); Zoeller, Thomas, 45276 Essen (DE)

(57) **Abstract**

The present invention relates to a thermally conductive polyurethane adhesive composition in the application of the batteries in electric vehicles, in particular, a thermally conductive polyurethane adhesive composition possesses excellent mechanical properties, excellent flame retardancy, high thermal conductivity, and efficient cycle rate, to an article comprising the adhesive composition, and to a method of manufacturing the same.

## Description

The present invention relates to a thermally conductive polyurethane adhesive composition in the application of the batteries in electric vehicles, in particular, a thermally conductive polyurethane adhesive composition possesses excellent mechanical properties, excellent flame retardancy, high thermal conductivity, and efficient cycle rate, to an article comprising the adhesive composition, and to a method of manufacturing the same.

Electric vehicles are advantageous over combustion engine vehicles in terms of reduced CO₂ emissions, reduced pollution, and greener energy consumption, amongst other factors. Currently, the thermal management of the battery is limiting the energy density, and subsequently the driving range, of electric vehicles. Concerns about driving range are a key factor towards consumer hesitancy about electric vehicles.

Batteries are typically thermally managed, or cooled, by a cooling unit in electric vehicles. A thermal interface material (TIM) facilitates the efficient transport of heat between battery and cooling unit. TIMs take a wide variety of forms, with effective physical bridging of the battery and cooling unit surfaces and good thermal conductivity being key criteria independent of the nature of the TIM. TIMs can take the form of thermal greases, putties, pads, gap fillers and phase-change materials, each with own set of performance characteristics, advantages, and disadvantages.

Thermally Conductive Adhesives (TCAs) are TIMs with advantages over the afore-mentioned technologies in that they attempt to combine the mechanical strength of a structural adhesive, including ideally maintained despite fluctuating temperature, humidity and vibration levels, with the thermal performance of a TIM. Typical additional requirements of these materials in battery applications include excellent flame retardance and electrical isolation.

The dispensing and assembly process of the automobile or battery manufacturer often also requires a specific set of properties, such as low abrasiveness of the single-component material, good dispensability of the pre-cured material and an excellent cycle-time performance/cycle rate for efficiency of assembly. The cycle-time refers to the time required to dispense the adhesive, assemble the part and then transport the assembled part off the line. The TCA influences this cycle-time by the trade-off between the compression force of the pre-cured material, which is required to be low within a given time window to allow the battery components and cooling plate to be sandwiched together without damage, and the build-up strength of the curing 2K mixture, which is required to provide structural integrity to the newly-assembled part as it is moved off the line.

Developing a TCA to satisfy all the above characteristics in tandem is challenging. Particularly advantageous would be to develop a TCA satisfying the above characteristics while offering a lowenergy, room-temperature cure, without the need for UV curing or additional time-intensive or expensive steps.

To achieve high-thermal conductivity (i.e. more than 1 W/mK), fillers with high thermal conductivity (i.e. more than 80 W/mK) can be used but they have the disadvantages of being expensive, abrasive and/or electrically conductive. Cheaper, less abrasive, and electrically isolating fillers typically have lower thermal conductivities (i.e. smaller than 50 W/mK) and as a result high filler loadings are required to reach a high thermal conductivity of more than 1 W/mK. These high filler loadings tend to result in low dispensing rates, high compression forces, high densities and tend to show poor ageing performance.

To achieve good cycle-time performance, careful control over the reactivity of the TCA is required, as well as judicious choice of the filler package and polyol to minimize the compression force. Should the material cure too quickly, the battery part cannot be assembled correctly with the required minimum forces on fragile components, e.g. less than0.5 MPa force at 0.8 mm gap, 15 mins after dispensing the adhesive composition. Should the adhesive cure too slowly, the battery part will not have the required structural strength within a given time window to be removed from the assembly line intact, e.g. larger than 0.25 MPa strength 60 mins after the dispensing.

Efforts have been made on developing thermal conductive adhesive composition for assembling batteries in electric vehicles.

For example, WO 2019120924 A1 discloses a two component adhesive composition for the use of electric powered vehicles, comprising a first component (A) and a separate second component (B), wherein component (A) comprises a-1) at least one polyol having a molecular weight Mn of 700 to 12000 g/mol; a-2) chain extender having a molecular weight Mn of 60 to 600 g/mol; a-3) at least one thermally conductive filler A1 exhibiting a thermal conductivity of no more than 50 W/m.K, such as aluminum oxide and aluminum hydroxide; and a-4) at least one thermally conductive filler A2 exhibiting a thermal conductivity of at least 80 W/m.K, such as graphite and boron nitride; and wherein component (B) comprises at least one NCO-terminated compound.

CN 111995979 A discloses a fast-curing polyurethane thermal conductive structural adhesive composition comprising part (A) and part (B), in which part (A) consists of a polyether diol, a chain extender, a thermal conductive filler, a flame retardant, a water scavenger, and a catalyst; and part (B) consists of a polyether glycol, 4,4'-diphenylmethane diisocyanate (MDI), a thermal conductive filler and a flame retardant. The adhesive is used for assembling the battery of electric vehicles.

US 20220209324 A1 discloses a thermal interface material composition for battery powered vehicles, comprising: a) a urethane based binder component, which comprises at least one non-reactive polyurethane prepolymer, and b) an aluminum trihydroxide, wherein the at least one non-reactive polyurethane prepolymer, i) is a reaction product of at least one polyisocyanate and at least one aliphatic monol, ii) is substantially free of residual isocyanate groups; and iii) has an average molecular weight of 2,000-50,000 g/mol, and wherein, if polyol based material is present in the composition, the content level of the polyol based material is less than the total content level of the urethane based binder component.

CN 111019587 A discloses a two-component polyurethane adhesive composition for battery powered vehicles, comprising part (A) and part (B), in which part (A) comprises a hydrophobic polyol, a polyester polyol, a surface-modified thermal conductive filler, an additional filler, a catalyst; and part (B) comprises a polyisocyanate, a polyisocyanate trimer, a surface-modified thermal conductive filler, and a dispensing agent.

CN 111808570 A also discloses a two-component polyurethane adhesive composition for battery powered vehicles, comprising part (A) and part (B), in which part (A) comprises a hydroxyl-terminated polybutadiene polyol, a flame-retardant polyester polyol, an aromatic polyether polyol, a chain extender, a filler, a silane coupling agent, a catalyst; and part B comprises a polyurethane prepolymer, a water scavenger, a filler and a dispersing agent.

Therefore, there is a strong need to develop high-performance, low density/lightweight, polyurethane based TCAs which can meet the combined criteria of high thermal conductivity, excellent flame retardancy, low compression force, good dispensability, high cycle rate, good mechanical properties, and good ageing performance.

These objects are achieved by the invention. One subject matter of the invention relates to a thermally conductive adhesive composition comprising:
(a) at least one polyol (A) having an average hydroxyl functionality at least 2.0 and a weight average molecular weight of larger than 3000 g/mol,
(b) at least one polyol (B) having an average hydroxyl functionality of at least 2.0 and a weight average molecular weight of no larger than 3000 g/mol,
(c) at least one chain extender,
(d) at least one catalyst,
(e) at least one reaction retarder,
(f) at least one isocyanate-terminated compound,
(g) at least one aluminum oxide, and
(h) at least one aluminum hydroxide.

"Molecular weight" refers to weight average molecular weight unless otherwise specified. The number average molecular weight Mn, as well as the weight average molecular weight Mw, is determined according to the present invention by gel permeation chromatography (GPC, also known as SEC) at 23°C using a styrene standard according to DIN EN ISO 16014-5:2012-10.

### Polyol (A)

A polyol is understood to be a compound containing more than one hydroxyl (-OH) group in the molecule. A polyol can further have other functionalities on the molecule. The term "polyol" encompasses a single polyol or a mixture of two or more polyols. Polyol (A) in the thermal conductive adhesive composition has an average hydroxyl functionality at least 2.0, preferably from 2.0 to 3.5, and more preferably from 2.0 to 3.0, and a weight average molecular weight of larger than 3000 g/mol, preferably larger than 4000 g/mol, and more preferably from 4000 to 6000 g/mol. The average hydroxyl (-OH) functionality refers to the average number of reactive hydroxyl groups contained in one molecule of polyol. When the -OH functionality and the molecular weight of polyol (A) are in respective ranges, such polyol (A) can provide to the cured adhesive a sufficient flexibility, which is required for the battery assemble bonded by the adhesive in view of for example impact resistance.

Some suitable polyols (A) having such -OH functionality and molecular weight include the reaction products of low molecular weight polyhydric alcohols with alkylene oxides, so-called polyether polyols. The alkylene oxides preferably contain 2 to 4 carbon atoms. Some reaction products of this type include, for example, the reaction products of ethylene glycol, propylene glycol, the isomeric butane diols, hexane diols or 4,4'-dihydroxydiphenyl propane with ethylene oxide, propylene oxide or butylene oxide or mixtures of two or more thereof. The reaction products of polyhydric alcohols, such as glycerol, trimethylol ethane or trimethylol propane, pentaerythritol or sugar alcohols or mixtures of two or more thereof, with the alkylene oxides mentioned to form polyether polyols are also suitable. Thus, depending on the desired molecular weight, products of the addition of only a few mol ethylene oxide and/or propylene oxide per mol or of more than one hundred mol ethylene oxide and/or propylene oxide onto low molecular weight polyhydric alcohols may be used. Other polyether polyols are obtainable by condensation of, for example, glycerol or pentaerythritol with elimination of water. Some suitable polyols include those polyols obtainable by polymerization of tetrahydrofuran.

The polyethers are reacted in known manner by reacting the starting compound containing a reactive hydrogen atom with alkylene oxides, for example ethylene oxide, propylene oxide, butylene oxide, styrene oxide, tetrahydrofuran or epichlorohydrin or mixtures of two or more thereof.

Suitable starting compounds are, for example, water, ethylene glycol, 1,2- or 1,3-propylene glycol, 1,4- or 1,3-butylene glycol, hexane-1,6-diol, octane-1,8-diol, neopentyl glycol, 1,4-hydroxymethyl cyclohexane, 2-methyl propane-1,3-diol, glycerol, trimethylol propane, hexane-1,2,6-triol, butane-1,2,4-triol, trimethylol ethane, pentaerythritol, mannitol, sorbitol, methyl glycosides, sugars, phenol, isononylphenol, resorcinol, hydroquinone, 1,2,2- or 1,1,2-tris-(hydroxyphenyl)-ethane, ammonia, methyl amine, ethylenediamine, tetra- or hexamethylenediamine, triethanolamine, aniline, phenylenediamine, 2,4- and 2,6-diaminotoluene and polyphenylpolymethylene polyamines, which may be obtained by aniline/formaldehyde condensation, or mixtures of two or more thereof.

Some suitable polyols (A) include diol EO/PO (ethylene oxide/propylene oxide) block copolymers, EO-tipped polypropylene glycols, or alkoxylated bisphenol A.

Some suitable polyols (A) include polyether polyols modified by vinyl polymers. These polyols can be obtained, for example, by polymerizing styrene or acrylonitrile or mixtures thereof in the presence of polyether polyol.

Some suitable polyols (A) include polyester polyols. For example, it is possible to use polyester polyols obtained by reacting low molecular weight alcohols, more particularly ethylene glycol, diethylene glycol, neopentyl glycol, hexanediol, butanediol, propylene glycol, glycerol or trimethylol propane, with caprolactone. Other suitable polyhydric alcohols for the production of polyester polyols are 1,4-hydroxymethylcyclohexane, 2-methylpropane-1,3-diol, butane-1,2,4-triol, triethylene glycol, tetraethylene glycol, polyethylene glycol, dipropylene glycol, polypropylene glycol, dibutylene glycol and polybutylene glycol.

Some suitable polyols (A) include polyester polyols obtained by polycondensation. Thus, dihydric and/or trihydric alcohols may be condensed with less than the equivalent quantity of dicarboxylic acids and/or tricarboxylic acids or reactive derivatives thereof to form polyester polyols. Suitable dicarboxylic acids are, for example, adipic acid or succinic acid and higher homologs thereof containing up to 16 carbon atoms, unsaturated dicarboxylic acids, such as maleic acid or fumaric acid, cyclohexane dicarboxylic acid (CHDA), and aromatic dicarboxylic acids, more particularly the isomeric phthalic acids, such as phthalic acid, isophthalic acid or terephthalic acid. Citric acid and trimellitic acid, for example, are also suitable tricarboxylic acids. The acids mentioned may be used individually or as mixtures of two or more thereof. Polyester polyols of at least one of the dicarboxylic acids mentioned and glycerol which have a residual content of OH groups are suitable. Suitable alcohols include but are not limited to propylene glycol, butane diol, pentane diol, hexanediol, ethylene glycol, diethylene glycol, triethylene glycol, dipropylene glycol, tripropylene glycol, cyclohexanedimethanol (CHDM), 2-methyl-1,3-propanediol (MPDiol), or neopentyl glycol or isomers or derivatives or mixtures of two or more thereof. High molecular weight polyester polyols may be used in the second synthesis stage and include, for example, the reaction products of polyhydric, preferably dihydric, alcohols (optionally together with small quantities of trihydric alcohols) and polybasic, preferably dibasic, carboxylic acids. Instead of free polycarboxylic acids, the corresponding polycarboxylic anhydrides or corresponding polycarboxylic acid esters with alcohols preferably containing 1 to 3 carbon atoms may also be used (where possible). The polycarboxylic acids may be aliphatic, cycloaliphatic, aromatic or heterocyclic or both. They may optionally be substituted, for example by alkyl groups, alkenyl groups, ether groups or halogens. Suitable polycarboxylic acids are, for example, succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid, dimer fatty acid or trimer fatty acid or mixtures of two or more thereof. Small quantities of monofunctional fatty acids may optionally be present in the reaction mixture.

The polyester polyol may optionally contain a small number of terminal carboxyl groups. Polyesters obtainable from lactones, for example based on ε-caprolactone (also known as "polycaprolactones"), or hydroxycarboxylic acids, for example ω-hydroxycaproic acid, may also be used.

Polyester polyols of oleochemical origin may also be used. Oleochemical polyester polyols may be obtained, for example, by complete ring opening of epoxidized triglycerides of a fatty mixture containing at least partly olefinically unsaturated fatty acids with one or more alcohols containing 1 to 12 carbon atoms and subsequent partial transesterification of the triglyceride derivatives to form alkyl ester polyols with 1 to 12 carbon atoms in the alkyl group.

Some suitable polyols (A) include C36 dimer diols and derivatives thereof. Some suitable polyols include castor oil and derivatives thereof. Some suitable polyols include fatty polyols, for example the products of hydroxylation of unsaturated or polyunsaturated natural oils, the products of hydrogenations of unsaturated and polyunsaturated polyhydroxy natural oils, polyhydroxyl esters of alkyl hydroxyl fatty acids, polymerized natural oils, soybean polyols, and alkylhydroxylated amides of fatty acids. Some suitable polyols include the hydroxy functional polybutadienes. Some suitable polyols include polyisobutylene polyols. Some suitable polyols include polyacetal polyols. Polyacetal polyols are understood to be compounds obtainable by reacting glycols, for example diethylene glycol or hexanediol or mixtures thereof, with formaldehyde. Polyacetal polyols may also be obtained by polymerizing cyclic acetals. Some suitable polyols include polycarbonate polyols. Polycarbonate polyols may be obtained, for example, by reacting diols, such as propylene glycol, butane-1 ,4-diol or hexane-1 ,6-diol, diethylene glycol, triethylene glycol or tetraethylene glycol or mixtures of two or more thereof, with diaryl carbonates, for example diphenyl carbonate, or phosgene. Some suitable polyols include polyamide polyols.

Some suitable polyols (A) include polyacrylates containing OH groups. These polyacrylates may be obtained, for example, by polymerizing ethylenically unsaturated monomers bearing an OH group. Such monomers are obtainable, for example, by esterification of ethylenically unsaturated carboxylic acids and dihydric alcohols, the alcohol generally being present in a slight excess. Ethylenically unsaturated carboxylic acids suitable for this purpose are, for example, acrylic acid, methacrylic acid, crotonic acid or maleic acid. Corresponding OH-functional esters are, for example, 2-hydroxyethyl acrylate, 2-hydroxyethyl methacrylate, 2-hydroxypropyl acrylate, 2-hydroxypropyl methacrylate, 3-hydroxypropyl acrylate or 3-hydroxypropyl methacrylate or mixtures of two or more thereof.

In one embodiment, polyol (A) is selected from polyether polyol, polyester polyol and the combination. In one preferred embodiment, polyol (A) is one or more polyether polyols, more preferably polypropylene glycols. The polyether polyols having an average hydroxyl functionality from at least 2.0 and a weight average molecular weight of larger than 3000 g/mol are commercially available, such as Voranol 4000LM and Voranol EP 1900 from Dow.

In another embodiment of the invention, polyol (A) is present in the adhesive composition in an amount of 1 to 30 wt%, preferably 1 to 20 wt%, based on the total weight of the adhesive composition. When the adhesive composition is in two-part or multi-part form, polyol (A) is present in one part in an amount of from 1 to 40 wt%, preferably 1 % to 20 wt%, based on the total weight of said part in the adhesive composition.

### Polyol (B)

Polyol (B) in the thermal conductive adhesive composition has an average hydroxyl functionality from at least 2.0, preferably from at least 2.5, and more preferably from larger than 3.0 to 5.0, and a weight average molecular weight of no larger than 3000 g/mol, preferably from 500 to 2500 g/mol. When the OH functionality and the molecular weight of polyol (B) are in respective ranges, the cured adhesive has an improved adhesion strength, which is critical for the battery assembly for electric vehicles.

Some suitable polyols (B) having such -OH functionality and molecular weight include the reaction products of low molecular weight polyhydric alcohols with alkylene oxides, so-called polyether polyols. The alkylene oxides preferably contain 2 to 4 carbon atoms. Some reaction products of this type include, for example, the reaction products of ethylene glycol, propylene glycol, the isomeric butane diols, hexane diols or 4,4'-dihydroxydiphenyl propane with ethylene oxide, propylene oxide or butylene oxide or mixtures of two or more thereof. The reaction products of polyhydric alcohols, such as glycerol, trimethylol ethane or trimethylol propane, pentaerythritol or sugar alcohols or mixtures of two or more thereof, with the alkylene oxides mentioned to form polyether polyols are also suitable. Thus, depending on the desired molecular weight, products of the addition of only a few mol ethylene oxide and/or propylene oxide per mol or of more than one hundred mol ethylene oxide and/or propylene oxide onto low molecular weight polyhydric alcohols may be used. Other polyether polyols are obtainable by condensation of, for example, glycerol or pentaerythritol with elimination of water. Some suitable polyols include those polyols obtainable by polymerization of tetrahydrofuran.

The polyethers are reacted in known manner by reacting the starting compound containing a reactive hydrogen atom with alkylene oxides, for example ethylene oxide, propylene oxide, butylene oxide, styrene oxide, tetrahydrofuran or epichlorohydrin or mixtures of two or more thereof.

Suitable starting compounds are, for example, water, ethylene glycol, 1,2- or 1,3-propylene glycol, 1,4- or 1,3-butylene glycol, hexane-1,6-diol, octane-1,8-diol, neopentyl glycol, 1,4-hydroxymethyl cyclohexane, 2-methyl propane-1,3-diol, glycerol, trimethylol propane, hexane-1,2,6-triol, butane-1,2,4-triol, trimethylol ethane, pentaerythritol, mannitol, sorbitol, methyl glycosides, sugars, phenol, isononylphenol, resorcinol, hydroquinone, 1,2,2- or 1,1,2-tris-(hydroxyphenyl)-ethane, ammonia, methyl amine, ethylenediamine, tetra- or hexamethylenediamine, triethanolamine, aniline, phenylenediamine, 2,4- and 2,6-diaminotoluene and polyphenylpolymethylene polyamines, which may be obtained by aniline/formaldehyde condensation, or mixtures of two or more thereof.

Some suitable polyols (B) include diol EO/PO (ethylene oxide/propylene oxide) block copolymers, EO-tipped polypropylene glycols, or alkoxylated bisphenol A.

Some suitable polyols (B) include polyether polyols modified by vinyl polymers. These polyols can be obtained, for example, by polymerizing styrene or acrylonitrile or mixtures thereof in the presence of polyether polyol.

Some suitable polyols (B) include polyester polyols. For example, it is possible to use polyester polyols obtained by reacting low molecular weight alcohols, more particularly ethylene glycol, diethylene glycol, neopentyl glycol, hexanediol, butanediol, propylene glycol, glycerol or trimethylol propane, with caprolactone. Other suitable polyhydric alcohols for the production of polyester polyols are 1,4-hydroxymethylcyclohexane, 2-methylpropane-1,3-diol, butane-1,2,4-triol, triethylene glycol, tetraethylene glycol, polyethylene glycol, dipropylene glycol, polypropylene glycol, dibutylene glycol and polybutylene glycol.

Some suitable polyols (B) include polyester polyols obtained by polycondensation. Thus, dihydric and/or trihydric alcohols may be condensed with less than the equivalent quantity of dicarboxylic acids and/or tricarboxylic acids or reactive derivatives thereof to form polyester polyols. Suitable dicarboxylic acids are, for example, adipic acid or succinic acid and higher homologs thereof containing up to 16 carbon atoms, unsaturated dicarboxylic acids, such as maleic acid or fumaric acid, cyclohexane dicarboxylic acid (CHDA), and aromatic dicarboxylic acids, more particularly the isomeric phthalic acids, such as phthalic acid, isophthalic acid or terephthalic acid. Citric acid and trimellitic acid, for example, are also suitable tricarboxylic acids. The acids mentioned may be used individually or as mixtures of two or more thereof. Polyester polyols of at least one of the dicarboxylic acids mentioned and glycerol which have a residual content of OH groups are suitable. Suitable alcohols include but are not limited to propylene glycol, butane diol, pentane diol, hexanediol, ethylene glycol, diethylene glycol, triethylene glycol, dipropylene glycol, tripropylene glycol, cyclohexanedimethanol (CHDM), 2-methyl-1,3-propanediol (MPDiol), or neopentyl glycol or isomers or derivatives or mixtures of two or more thereof. High molecular weight polyester polyols may be used in the second synthesis stage and include, for example, the reaction products of polyhydric, preferably dihydric, alcohols (optionally together with small quantities of trihydric alcohols) and polybasic, preferably dibasic, carboxylic acids. Instead of free polycarboxylic acids, the corresponding polycarboxylic anhydrides or corresponding polycarboxylic acid esters with alcohols preferably containing 1 to 3 carbon atoms may also be used (where possible). The polycarboxylic acids may be aliphatic, cycloaliphatic, aromatic or heterocyclic or both. They may optionally be substituted, for example by alkyl groups, alkenyl groups, ether groups or halogens. Suitable polycarboxylic acids are, for example, succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid, dimer fatty acid or trimer fatty acid or mixtures of two or more thereof. Small quantities of monofunctional fatty acids may optionally be present in the reaction mixture.

The polyester polyol may optionally contain a small number of terminal carboxyl groups. Polyesters obtainable from lactones, for example based on ε-caprolactone (also known as "polycaprolactones"), or hydroxycarboxylic acids, for example ω-hydroxycaproic acid, may also be used.

Polyester polyols of oleochemical origin may also be used. Oleochemical polyester polyols may be obtained, for example, by complete ring opening of epoxidized triglycerides of a fatty mixture containing at least partly olefinically unsaturated fatty acids with one or more alcohols containing 1 to 12 carbon atoms and subsequent partial transesterification of the triglyceride derivatives to form alkyl ester polyols with 1 to 12 carbon atoms in the alkyl group.

Some suitable polyols (B) include C36 dimer diols and derivatives thereof. Some suitable polyols include castor oil and derivatives thereof. Some suitable polyols include fatty polyols, for example the products of hydroxylation of unsaturated or polyunsaturated natural oils, the products of hydrogenations of unsaturated and polyunsaturated polyhydroxy natural oils, polyhydroxyl esters of alkyl hydroxyl fatty acids, polymerized natural oils, soybean polyols, and alkylhydroxylated amides of fatty acids. Some suitable polyols include the hydroxy functional polybutadienes. Some suitable polyols include polyisobutylene polyols. Some suitable polyols include polyacetal polyols. Polyacetal polyols are understood to be compounds obtainable by reacting glycols, for example diethylene glycol or hexanediol or mixtures thereof, with formaldehyde. Polyacetal polyols may also be obtained by polymerizing cyclic acetals. Some suitable polyols include polycarbonate polyols. Polycarbonate polyols may be obtained, for example, by reacting diols, such as propylene glycol, butane-1 ,4-diol or hexane-1 ,6-diol, diethylene glycol, triethylene glycol or tetraethylene glycol or mixtures of two or more thereof, with diaryl carbonates, for example diphenyl carbonate, or phosgene. Some suitable polyols include polyamide polyols.

Some suitable polyols (B) include polyacrylates containing OH groups. These polyacrylates may be obtained, for example, by polymerizing ethylenically unsaturated monomers bearing an OH group. Such monomers are obtainable, for example, by esterification of ethylenically unsaturated carboxylic acids and dihydric alcohols, the alcohol generally being present in a slight excess. Ethylenically unsaturated carboxylic acids suitable for this purpose are, for example, acrylic acid, methacrylic acid, crotonic acid or maleic acid. Corresponding OH-functional esters are, for example, 2-hydroxyethyl acrylate, 2-hydroxyethyl methacrylate, 2-hydroxypropyl acrylate, 2-hydroxypropyl methacrylate, 3-hydroxypropyl acrylate or 3-hydroxypropyl methacrylate or mixtures of two or more thereof.

In one embodiment, polyol (B) is selected from polyether polyol, polyester polyol and the combination. In one preferred embodiment, polyol (B) is polyether polyol and/or polyester polyol based on castor oil or soybean oil. Such polyether- and/or polyester polyols are preferably reaction products of castor oil with ketone raisins, in particular those marketed, for example, by Covestro under the trade name of Desmophen 1150 and by BASF under the trade name Sovermol 805.

In one embodiment of the invention, polyol (B) is present in the adhesive composition in an amount of 1 to 30 wt%, preferably 1 to 20 wt%, based on the total weight of the adhesive composition. When the adhesive composition is in two-part or multi-part form, polyol (B) is present in one part in an amount of from 1 to 20 wt%, preferably 1 wt% to 10 wt%, based on the total weight of said part in the adhesive composition.

### Chain extender

The adhesive composition according to the present invention further comprises a chain extender. Usually, chain extenders are low molecular weight molecules used to modify the backbone of a given polymer. Preferably, the chain extender has a molecular weight Mₙ of 60 to 600 g/mol, and more preferably from 60 to 500 g/mol. In a preferred embodiment, the chain extender is a diol, in particular a linear or branched diol with 9 or less carbon atoms. In an especially preferred embodiment, the chain extender is selected from the group consisting of 1,2-propanediol, 1,3-propanediol, 2-methyl-1,3-propanediol, 1,2-butanediol, 1,3-butanediol, 1,4-butanediol, 1,5-pentanediol, 3-methyl-1,5-prentanediol, 1,6-hexanediol, 1,9-nonanediol, ethylene glycol, polyethylene glycol, propylene glycol, polypropylene glycol, neopentyl glycol, polybutylene glycol, cyclohexane-1,2-diol, cyclohexane-1,4-diol, 1,4-bis(hydroxymethyl)cyclohexane, and dimer diols (such as Pripol series from Croda) and mixtures thereof. In one preferred embodiment, the chain extender is 1,3-butanediol or 1,4-butanediol.

The chain extender is present in the adhesive composition in an amount of from 0.1 to 10 wt%, preferably in an amount of 0.2 to 5 wt%, based on the total weight of adhesive composition. It was found that the mechanical properties of the adhesive composition could be adjusted as needed by varying the amount of chain extender in component A.

In another embodiment, the weight ratio of polyols (A) and B between the chain extender in the adhesive composition is from 50:1 to 4:1, preferably 20:1 to 5:1.

### Catalyst

The adhesive composition according to the present invention also contains one or more catalysts, selected from tertiary amine compounds, organometallic compounds, and mixture thereof. As catalysts, the usual organometallic compounds as known in polyurethane chemistry may be used, such as e.g. iron or in particular tin compounds. Examples of these are 1,3-dicarbonyl compounds of iron, such as iron(lll)-acetylacetonate, such as in particular the organotin compounds of di- and tetravalent tin, in particular the Sn(ll)-carboxylates or the dialkyl-Sn(IV)-dicarboxylates or the corresponding dialkoxylates, such as e.g. dibutyl tin dilaurate, dibutyl tin diacetate, dioctyl tin diacetate, dibutyl tin maleate, tin(ll)-octoate. In particular, tertiary amines or amidines may be used as catalysts, optionally in combination with the above-mentioned tin compounds. As amines, both acyclic and in particular cyclic compounds may be used here. Examples are tetramethylbutane diamine, bis(dimethylaminoethyl)ether, 1,4-diaza-bicyclooctane (DABCO), 1,8-diaza-bicyclo-(5.4.0)-undecene, 2,2'-dimorpholino diethyl ether, dimethyl piperazine or mixtures of the above-mentioned amines. A preferred embodiment of the adhesive composition according to the present invention comprises a tin compound, in particular dibutyl tin dilaurate as catalyst, such as those sold under the trade name of TINSTAB BL 277.

The catalyst is present in the adhesive composition in an amount of from 0.001 to 1 wt%, preferably in an amount of 0.01 to 0.5 wt%, based on the total weight of adhesive composition.

### Reaction retarder

The adhesive composition according to the present invention also contains one or more reaction retarders. As a reaction retarder in the context of this invention, substances are understood that slow the reaction between OH and NCO groups. For this purpose, thiols such as alkyl thiols and/or acidic compounds are suitable.

Examples of acidic compounds are organic or inorganic carboxylic acids, acid chlorides, acidic inorganic salts or other acidic organic compounds. Organic acids to be used as reaction retarders according to the invention are those which, for example, have a pKa range between 2.8 and 4.5, such as phthalic acid, isophthalic acid, terephthalic acid, ascorbic acid, benzoic acid, o-hydroxybenzoic acid, p-hydroxybenzoic acid, 2,3-dihydroxybenzoic acid, 2,4-dihydroxybenzoic acid, 3,4-dihydroxybenzoic acid, salicylic acid, adipic acid, succinic acid, malic acid, acetylsalicylic acid, alanine, β-alanine, 4-amino-butyric acid, glycine, lactic acid, sarcosine, serine. However, it is also possible to use formic acid, acetic acid, monochloric or dichloroacetic acid, 2,4- or 2,6-dichlorophenylacetic acid; Phosphoric acid, hydrogen phosphates; polymeric cation exchangers with carboxy groups or with orthophosphate groups; Lithium chloride, 4-toluenesulfonyl isocyanate or acid chlorides of the above-mentioned carboxylic acids are used. It can be used both individually and mixtures, the aforementioned acidic compounds.

Examples of thiols include, but are not limited to, isooctyl 3-mercaptopropionate, dodecyl 3-mercaptopropionate, trimethylolpropane tris(3-mercaptopropionate), pentaerithritol tetrakis(3-mercaptopropionate), dipentaerithritol hexakis(3-mercaptopropionate), tris[2-(3-mercaptopropionyloxy)ethyl]isocyanurate, tetraethylene glycol bis(3-mercaptopropionate), 1,10-decanedithiol, ethylene glycol bis(3-mercaptopropionate), 1,2-ethanedithiol, 1,3-propanedithiol, 1,4-butanedithiol, 1,6-hexanedithiol, 1,8-octanedithiol, 2-mercaptoethanol, monofunctional aliphatic linear and branched thiols with n=2 to 40 carbons, 1,8-dimercapto-3,6-dioxaoctane, n-dodecyl mercaptan, n-octyl mercaptan, pentaerythritol tetrakis(3-mercaptobutylate), 1,4-bis (3-mercaptobutylyloxy) butane, 1,3,5-tris(3-mercaptobutyloxethyl)-1,3,5-triazine-2,4,6(1H,3H,5H)-trione, tertiarydodecyl mercaptan, ethyl mercaptan, isopropyl mercaptan, dipentene dimercaptan, methyl mercaptan, n-propyl mercaptan, sec-butyl mercaptan, tert-nonyl mercaptan, tert-dodecyl mercaptan, tertiary mercaptan blends, tert-butyl mercaptan, grapefruit mercaptan, thioglycolic acid, thiolactic acid, 3-mercaptopropionic acid, ammonium thioglycolate, monoethanolamine thioglycolate, sodium thioglycolate, potassium thioglycolate, 2-ethylhexyl thioglycolate, isooctyl thioglycolate, isotridecyl thioglycolate, glyceryl thioglycolate, glyceryl dimercaptoacetate, pentaerythritol tetramercaptoacetate, butyl-3-mercaptopropionate, 2-ethylhexyl-3-mercaptopropionate, iso-tridecyl-3-mercaptopropionate, octadecyl 3-mercaptopropionate, ethoxylated trimethylolpropane tris(3-mercaptopropionate) with n=1 to 10,000 ethylene oxide repeat units, monoethanolamine thiolactate, thiodiglycolic acid, diammonium dithioglycolate, di(2-ethylhexyl) thiodiglycolate, methylene bis(butylthioglycolate), thiodipropionic acid, dithiobis(stearylpropionate), thioglycerol, dithioglycerol. It can be used both individually and mixtures, the aforementioned thiol compounds.

In one preferred embodiment, the reaction retarder is a monofunctional aliphatic linear and branched thiols, in particular n-dodecyl mercapton.

The reaction retarder is present in the adhesive composition in an amount of from 0.001 to 2 wt%, preferably in an amount of 0.01 to 1 wt%, based on the total weight of adhesive composition.

In one preferred embodiment, the weight ratio of the reaction retarder to the catalyst in the adhesive composition presents in the range of larger than 1 to less than 2, in particular from 1.2 to 1.8. When the above-mentioned weight ratio is within such range, a good balance of build-up strength and compression force of the cured adhesive can be obtained, and in turn a high cycle rate of bonding battery assembly by the adhesive composition can be achieved.

### Isocyanate-terminated compound

The isocyanate-terminated compound can be any compound having on average two, three or more isocyanate groups. As incorporated herein the term "isocyanate-terminated compound" encompasses diisocyanate, polymeric isocyanates, and isocyanate-terminated oligomers and polymers. It can be used both individually and mixtures, such isocyanate-terminated compounds. In one embodiment, the isocyanate-terminated compound is selected from the group consisting of an aromatic polyisocyanate, an alicyclic polyisocyanate, an aliphatic polyisocyanate, and mixture thereof, and preferably is one or more aliphatic polyisocyanates. The isocyanate-terminated compound preferably has an NCO content of 20 to 30%. The viscosity of the isocyanate-terminated compound is preferably no more than 5000 mPa.s.

Some advantageous isocyanate-terminated compounds have the general structure O=C=N-X-N=C=O where X is an aliphatic, alicyclic or aryl radical, preferably an aliphatic or alicyclic radical containing 4 to 18 carbon atoms.

Some suitable isocyanates include 1,5-naphthylene diisocyanate, diphenyl methane diisocyanate (MDI) including the 2,2'- 2,4'- and 4,4'- isomers, polymeric MDI (pMDI), hydrogenated MDI (HMDI), xylylene diisocyanate (XDI), tetramethyl xylylene diisocyanate (TMXDI), di- and tetraalkylene diphenylmethane diisocyanate, 4,4'-dibenzyl diisocyanate, 1,3-phenylene diisocyanate, 1,4-phenylene diisocyanate, the isomers of toluene diisocyanate (TDI), 1-methyl-2,4-diisocyanatocyclohexane, 1,6-diiso-cyanato-2,2,4-trimethyl hexane, 1,6-diisocyanato-2,4,4-trimethyl hexane, 1-isocyanatomethyl-3-isocyanato-1,5,5-trimethyl cyclohexane (IPDI), chlorinated and brominated diisocyanates, phosphorus-containing diisocyanates, 4,4'-diisocyanatophenyl perfluoroethane, tetramethoxybutane-1,4-diisocyanate, butane-1,4-diisocyanate, hexane-1,6-diisocyanate (HDI), dicyclohexylmethane diisocyanate, cyclo-hexane-1,4-diisocyanate, ethylene diisocyanate, phthalic acid-bis-isocyanatoethyl ester; diisocyanates containing reactive halogen atoms, such as 1-chloromethylphenyl-2,4-diisocyanate, 1-bromomethylphenyl-2,6-diisocyanate or 3,3-bis-chloromethylether4,4'-diphenyl diisocyanate. Aromatic polyisocyanates are preferred and diphenyl methane diisocyanate (MDI) and its isomers and polymeric MDI (pMDI) are more preferred as part or all of the polyisocyanates used for synthesis of the pre-polymers.

Some suitable isocyanates include isocyanate functional pre-polymers. Such pre-polymers are formed by reacting excess amount of polyisocyanate with a polyol, a polyamine, polythiol, or the combination of them. "Excess" is understood to mean that there are more equivalents of isocyanate functionality from the polyisocyanate compound than equivalents of hydroxyl functionality from the polyol present during reaction to form the pre-polymer. In this disclosure, it is to be understood that the terms polyisocyanate pre-polymer or pre-polymer or isocyanate functional pre-polymer are applied to any compound made according to the forgoing description, i.e., as long as the compound is made with at least a stoichiometric excess of isocyanate groups to isocyanate reactive groups it will be referred to herein as polyisocyanate pre-polymer or a pre-polymer or isocyanate functional pre-polymer.

Sulfur-containing polyisocyanates are obtained, for example, by reaction of 2 mole hexamethylene diisocyanate with 1 mole thiodiglycol or dihydroxydihexyl sulfide. Other suitable diisocyanates are, for example, trimethyl hexamethylene diisocyanate, 1,4-diisocyanatobutane, 1,12-diisocyanatododecane and dimer fatty acid diisocyanate. Suitable diisocyanates are the tetramethylene diisocyanate, hexamethylene diisocyanate, undecane diisocyanate, dodecamethylene diisocyanate, 2,2,4-trimethylhexane-2,3,3-trimethylhexamethylene diisocyanate, 1,3-cyclohexane diisocyanate, 1,4-cyclohexane diisocyanate, 1,3- and 1,4-tetramethyl xylene diisocyanate, isophorone, 4,4-dicyclohexylmethane, tetramethylxylylene (TMXDI) and lysine ester diisocyanate.

Aliphatic polyisocyanates with two or more isocyanate functionality formed by biuret linkage, uretdione linkage, allophanate linkage, and/or by trimerization are suitable.

Suitable at least trifunctional isocyanates are polyisocyanates formed by trimerization or oligomerization of diisocyanates or by reaction of diisocyanates with polyfunctional compounds containing hydroxyl or amino groups. Isocyanates suitable for the production of trimers are the diisocyanates mentioned above, the trimerization products of HDI, MDI, TDI or IPDI being preferred.

Blocked, reversibly capped polyisocyanates, such as 1,3,5-tris-[6-(1-methylpropylideneaminoxycarbonylamino)-hexyl]-2,4,6-trix-ohexahydro-1,3,5-triazine, are also suitable. The polymeric isocyanates formed, for example, as residue in the distillation of diisocyanates are also suitable for use. The isocyanate-terminated compound encompasses a single compound or the mixture of two or more compounds.

In one preferred embodiment, the isocyanate-terminated compound is selected from HDI, IPDI, the oligomer thereof, and the combination thereof, and in particular is the combination of HDI trimer and IPDI. The particularly selected isocyanate-terminated compound may contribute to an improved lap shear strength and tensile strength of the cured product.

The isocyanate-terminated compound is present in the adhesive composition in an amount of from 1 to 20 wt%, preferably in an amount of 1 to 10 wt%, based on the total weight of adhesive composition. When the isocyanate-terminated compound is contained in a two-part adhesive composition, the amount of the isocyanate-terminated compound ranges from 5 to 30 wt%, preferably 15 to 20 wt%, based on the total weight of the part.

The ratio of the isocyanate groups contained in the isocyanate-terminated compounds relative to the OH groups contained in the polyols is as a rule in the range of equivalence and it is expedient if a slight excess of isocyanate groups in relation to the humidity is present at the surface. According to the invention, the NCO/OH ratio is between 0.90:1 and 1.5:1, in particular between 1.0:1 and 1.3:1.

### Aluminium oxide

According to the present invention, the thermally conductive adhesive composition comprises at least one aluminium oxide as thermal conductive filler. The thermal conductive fillers provide the thermal conductivity to the cured adhesive which avoids the battery from over-heating. The aluminium oxide may have an average particle diameter D50 from 0.1 µm to 100 µm, preferably from 0.5 µm to 50 µm. The aluminium oxide can be used in single or in mixture of two or more aluminium oxides having different particle sizes.

In the present invention, there are no particular restrictions on the shape of the aluminium oxide filler. The shape may be a regular or irregular shape and includes but is not limited to polygon, cube, oval, sphere, needle, flake, plate or any combination thereof. Preferably, the aluminium oxides are in a spherical shape. The aluminium oxide may be surface-modified or non-surface modified.

Examples of commercially available aluminium oxides include, for example, AX1 M from NIPPON STEEL Chemical & Material Co., Ltd.; NASR-05 from Bestry Performance Materials Co., Ltd.; DAW-01 from Denka Corporation. BAK 10 from Bestry Performance Materials Co., Ltd.; BA 7 from Bestry Performance Materials Co., Ltd.; BAK 5 from Bestry Performance Materials Co., Ltd.

The aluminium oxide is present in an amount of from 10 to 60 wt%, preferably 20 to 50 wt% based on the total weight of the thermally conductive adhesive composition.

### Aluminium hydroxide

According to the present invention, the thermally conductive adhesive composition also comprises at least one aluminium hydroxide as thermal conductive filler as well as flame retardant. In addition to it thermal conductivity, aluminium hydroxide inhibits or delays the spread of fire by suppressing the chemical reactions in the flame or by the formation of a protective layer on the surface of the bonded material. The aluminium hydroxide may have an average particle diameter D50 from 1 µm to 200 µm, preferably from 30 µm to 150 µm. The aluminium hydroxide can be used in single or in mixture of two or more aluminium hydroxides having different particle size.

In the present invention, there are no particular restrictions on the shape of the aluminium hydroxide filler. The shape may be a regular or irregular shape and includes but is not limited to polygon, cube, oval, sphere, needle, flake, plate or any combination thereof. Preferably, the aluminium hydroxides are in a spherical shape. The aluminium hydroxide may be surface-modified or non-surface modified.

Examples of commercially available aluminium hydroxides include, for example Martinal series products from Huber Advanced Materials.

The aluminium hydroxide is present in an amount of from 10 to 60 wt% based on the total weight of the thermally conductive adhesive composition. Preferably, aluminium hydroxide is present in an amount of from 30 to 50 wt% to improve the flame retardancy of the cured adhesive.

The total content of aluminium oxide and aluminium hydroxide is preferably from 50 wt% to 98 wt%, more preferably from 70 wt% to 95 wt%, based on the total weight of the thermally conductive adhesive composition to achieve a good balance between viscosity of the adhesive composition and thermal conductivity of the cured adhesive.

### Additive

The composition according to the invention may further comprise additives. The additives are preferably selected such that they do not enter into a reaction or a side reaction with the isocyanates, at least not during the period of the cross-linking reaction. Preferably, the one or more additives are selected from the group consisting of plasticizer, additional filler, pigments, rheology modifiers, drying agents, additional flame retardants, water scavenger, anti-settling agent and anti-foaming agents. In preferred embodiment the amount of the additives present in the adhesive composition is from 0 to 10 wt%, preferably 0.1 to 5 wt%, based on the total weight of the adhesive composition. In another embodiment, the adhesive composition according to the present invention contains essentially no plasticizer or even contains no plasticizer such as phthalates, as the plasticizers may leach out the adhesive composition during storage or application. "Essentially no" is to be understood that the respective component is present in an amount less than 2 wt%, more preferably less than 1 wt%, and even more preferably less than 0.5 wt%, in particular less than 0.1 wt% based on the total weight of the adhesive composition. In yet another embodiment, the present adhesive composition contains essentially no phosphorus compounds as flame retardent or even contains no phosphorus compounds as they may not be compatible with the other components in the adhesive composition.

### One-part, two-part or multi-part thermal conductive adhesive composition

The thermal conductive adhesive composition according to the present application may be in the form of one-part, two-part or multi-part composition. In one embodiment, thermal conductive adhesive composition may be kept and stored in one-part when the reactants are inert under storage conditions, for example by blocking the reactive groups of some reactants.

When the thermal conductive adhesive composition is a two-part adhesive composition, it consists of:
part (A) comprising:
   (a) at least one polyol (A) having an average hydroxyl functionality from at least 2.0 and a weight average molecular weight of larger than 3000 g/mol,
   (b) at least one polyol (B) having an average hydroxyl functionality of at least 2.0 and a weight average molecular weight of no larger than 3000 g/mol,
   (c) at least one chain extender,
   (d) at least one catalyst, and
   (e) at least one reaction retarder, and
part (B) comprising:
   (f) at least one isocyanate-terminated compound,
in which part (A) and/or part (B) further comprises:
   (g) at least one aluminum oxide, and
   (h) at least one aluminum hydroxide.

When necessary, a portion of components such as filler or other additives can be kept in one or more parts other than parts (A) and (B), which forms a multi-part thermal conductive adhesive composition.

In one preferred embodiment, the two-part adhesive composition consists of:
part (A) based on the weight of part (A) comprising:
   (a) from 1 to 40 wt%, preferably 1 % to 20 wt% of at least one polyol (A) having an average hydroxyl functionality from at least 2.0 and a weight average molecular weight of larger than 3000 g/mol,
   (b) from 1 to 20 wt%, preferably 1 % to 10 wt% of at least one polyol (B) having an average hydroxyl functionality of at least 2.0 and a weight average molecular weight of no larger than 3000 g/mol,
   (c) from 0.1 to 10 wt%, preferably in an amount of 0.2 to 5 wt% of at least one chain extender,
   (d) from 0.001 to 1 wt%, preferably in an amount of 0.01 to 0.5 wt% of at least one catalyst, and
   (e) from 0.001 to 2 wt%, preferably in an amount of 0.01 to 1 wt% of at least one reaction retarder,
   (g) from 10 to 60 wt%, preferably 20 to 50 wt% of at least one aluminum oxide, and
   (h) from 10 to 60 wt%, preferably 20 to 50 wt% at least one aluminum hydroxide, and
part (B) based on the weight of part (B) comprising:
   (f) from 5 to 30 wt%, preferably 15 to 20 wt% at least one isocyanate-terminated compound,
   (g) from 10 to 60 wt%, preferably 20 to 50 wt% of at least one aluminum oxide, and
   (h) from 10 to 60 wt%, preferably 20 to 50 wt% at least one aluminum hydroxide,

A further object of the invention is cured adhesive product obtainable by curing the adhesive composition according to the invention. Curing of the inventive adhesive composition can be carried out by common methods well known to the person skilled in the art, such as low energy and room temperature curing, treatment with radiation, for example UV light, exposure to moisture, induction and/or heating.

In order to be processable in industrial application, the adhesive composition needs to have a viscosity that allows easy and precise application. Therefore, an embodiment is preferred wherein the adhesive composition according to the invention has a viscosity of no more than 10000 Pas, preferably no more than 1000 Pas, in particular 30 to 1000 Pas, measured by HAAKE Rotational Rheometer with parallel plates (20 mm diameter) at a shear rate of 2.4 s⁻¹ at 20°C. In addition, the adhesive composition according to the invention has a density of 2 to 3 g/mL and preferably 2.1 to 2.6 g/mL.

The inventive adhesive composition is thermally conductive. In a preferred embodiment, the adhesive composition exhibits a thermal conductivity of at least 0.8 W/mK, preferably 1.0 to 3.0 W/mK, determined according to ISO 22007-2 at 25°C. It was surprisingly found that an advantageous balance between thermal conductivity and adhesiveness can be achieved if the thermal conductivity of the adhesive composition is chosen within the above ranges. Further, a thermal conductivity in the above range makes the adhesive composition especially suitable for use in the assemblies of energy storage devices, such as battery.

Commonly, the thermal conductivity of an adhesive composition is achieved with the compromise of some other properties of the adhesive, such as flame retardancy, the adhesion and mechanical properties of the adhesive. It was surprisingly found that the inventive cured adhesive composition not only exhibits excellent thermal conductivity, but also possess advantageous mechanical properties and high cycle rate.

The cured adhesive product according to the present invention exhibits a tensile strength of at least 0.5 MPa, and preferably at least 1.0 MPa determined according to DIN EN ISO 527-2 at 23°C. The cured adhesive product according to the present invention exhibits a lap shear strength of at least 2.0 MPa. and preferably at least 3.0 MPa determined according to DIN EN ISO 4587-03 at 23°C. The cured adhesive product according to the present invention exhibits an elongation at break of at least 10%, preferably at least 15% according to DIN EN ISO 527-2 at 23°C.

In addition, the cured adhesive product has excellent flame retardancy, and exhibits no burning dripping (V0 level) at 1 mm thickness in the UL 94 fire test.

The cured adhesive product exhibits a build-up strength of 0.25 to 1.0 MPa after curing for 60 min at room temperature according to DIN EN ISO 4587-03. If the material cures too slowly and shows lower build-up strength, the bonded work piece such as battery will not have the required structural strength within a given time window to be removed from the assembly line intact.

When the thermal conductive adhesive composition is a two-part composition as describe above, part (A) possesses a compression force from 0.1 to 0.5 MPa, preferably from 0.2 to 0.4 MPa at 0.5 mm thickness when compressed to this thickness by a stamp moving at 1 mm/s. The compression force is defined as the force measured at a certain thickness, when a stamp of a fixed area moving at a certain speed presses the material under test to this defined thickness. The mixed adhesive composition possesses a compression force from 0.1 to 0.5 MPa, preferably from 0.2 to 0.4 MPa at 0.5 mm thickness when compressed to this thickness by a stamp moving at 1 mm/s after 10 minutes curing time of the mixed adhesive composition at room temperature (23°C). If the adhesives cure too quickly and show high compression force soon after curing, the bonded work piece such as battery will not assembled correctly with the required minimum forces on the fragile cured adhesive within a sufficiently broad time window, meaning that the cycle rate achieved by the adhesive will be low. A sufficient cycle rate for the manufacturing process by using the adhesive composition can therefore be achieved with the combination of the above-mentioned curing and mechanical properties.

The inventive adhesive composition is, in particular, suitable for use in the assembly of energy storage devices such as battery. It is therefore important that the cured adhesive composition does not exhibit any significant electrical conductivity. In a preferred embodiment, the cured adhesive composition therefore possesses a high volume resistivity, preferably more than 10⁹Ωm, in particular more than 10¹⁰Ωm, determined according to DIN EN 62631-3-1.

In order to produce adhesive composition according to the invention, the polyols (A) and (B) are mixed optionally under heating, subsequently optionally solid components should be dissolved in the mixtures. Subsequently, the additives are mixed and dispersed. In this context, the humidity content should be kept low, for example water can be reduced by means of molecular sieves. Inert additives may also partially be admixed to the polyisocyanate compound. For application, the polyol parts and the isocyanate parts are mixed together in a manner known per se and the mixture is applied to the substrates to be bonded together.

A further object of the present invention is a method of manufacturing an article using the adhesive composition according to the invention. The method according to the invention comprises the following steps:
i) applying the adhesive composition according to the invention onto the surface of a first substrate to be bonded;
ii) bringing the surface of the first substrate to be bonded, treated with the adhesive composition, into contact with a second substrate to be bonded; and
iii) curing the adhesive composition to obtain the desired article.

In a preferred embodiment, contacting of the first substrate to be bonded with the second substrate to be bonded is carried out by applying pressure.

The method according to the invention is especially suitable for the manufacture of temperature-sensitive devices. In a preferred embodiment, the adhesive composition is therefore applied onto the surface of the first substrate at a temperature of 20 to 100°C, preferably 23 to 70°C.

A further object is an article obtainable according to method of manufacture according to the invention. Preferably, the article according to the invention comprises the cured adhesive composition according to the invention.

The adhesive composition according to the invention can be applied in a variety of technical fields and is especially suitable in the manufacture of heat-sensitive objects, in particular objects where heat is generated. Accordingly, a further object of the present invention is the use of the inventive adhesive composition in pipes, preferably cooling coils; in electronic components, preferably lightemitting devices, computer devices, mobile phones, tablets, touch screens, energy storage devices, automotive technology, hifi systems, and audio systems; in joints between heat pipes and water tanks in solar heated heating; in fuel cell and wind turbines; in the manufacture of computer chips; in light devices; batteries; in housings; in coolers; heat exchanging devices; wires; cables; heating wires; household appliances such as refrigerators and dishwashers; air conditionings; accumulators; transformers; lasers; functional clothing; car seats; medical devices; fire protection; electric motors; planes and trains.

The invention will be illustrated in more detail by way of the following examples which are not to be understood as limiting the concept of the invention.

### Examples

The following materials were used in the examples.

Polyol (A) is an ethylene glycol end-capped polyethylene glycol/polypropylene glycol polyol having an Mw of about 4000 g/mol and an OH functionality of about 2.0, commercially available under the trade name of Voranol EP 1900 from Dow.

Polyol (B) is a castor oil based polyether/polyester polyol having a Mw of about 1000 g/mol, and an OH functionality of about 3.5, commercially available under the trade name of Sovermol 805 from BASF.

PPG-2000 is a polyether polyol having a Mw of about 2000 g/mol and an OH functionality of about 2.0, commercially available under the trade name of Arcol PPG-2000 from Covestro.

Krasol LBH P 2000 is a polybutadiene polyol having a Mw of about 2100 g/mol and an OH functionality of about 1.9, commercially available from Cray Valley.

Chain extender is 1,3-butanediol obtained from Sigma-Aldrich.

Aluminum oxide filler is a mixture of commercially available aluminum oxides having D50 particle sizes of about 10 µm and about 2 µm respectively.

Aluminum hydroxide filler is commercially available product having a D50 particle size of about 90 µm.

Catalyst is dibutyl tin dilaurate commercially available under the trade name of TINSTAB BL 277 from Akcros.

Reaction retarder is n-dodecyl mercaptan obtained from Sigma-Aldrich.

Polyisocyanate 1 is a mixture of HDI trimer and IPDI, commercially available from Covestro.

Polyisocyanate 2 is HDI trimer commercially available from Covestro.

Additive is a mixture of water scavenger, anti-setting agent and adhesion promoter conventionally used in the art.

Two-part polyurethane adhesive compositions were prepared as Examples (Ex.) and Comparative Examples (CEx.). Part A of the compositions were formulated according to the components and amounts in Tables 1 and 2 by mixing well all components except the thermal conductive filler and flame retardant with a Speed mixer DAC400 (from FlackTek Inc.). Until the mixture was dissolved completely, the thermal conductive filler and flame retardant were added into the mixture and mixing well to obtain Part A.

Part B of the compositions contains the polyisocyanate and the filler/flame retardant package same as part A as shown in Table 3. Part B was mixed well by using a Speed Mixer DAC400 (from FlackTek Inc.). Parts A and B were mixed together in a weight ratio of 2:1 before being applied on substrate. The different combinations of two-parts adhesive formulation are shown in Table 4.

**Table 1. Formulations of Part A of the adhesive compositions according to the invention (in gram)**

| | A-1 | A-2 | A-3 | A-4 | A-5 |
|---|---|---|---|---|---|
| Polyol (A) | 9.6 | 9.6 | 9.6 | 9.6 | 9.6 |
| Polyol (B) | 4.4 | 4.4 | 4.4 | 4.4 | 4.4 |
| Chain extender | 1.12 | 1.12 | 1.12 | 1.12 | 1.12 |
| Aluminum oxide | 37.42 | 27.42 | 37.42 | 37.42 | 37.42 |
| Aluminum hydroxide | 45.73 | 55.73 | 45.73 | 45.73 | 45.73 |
| Catalyst | 0.06 | 0.06 | 0.05 | 0.06 | 0.05 |
| Reaction retarder | 0.08 | 0.08 | 0.075 | 0.06 | 0.1 |
| Additives | Upto 100 | Up to 100 | Up to 100 | Up to 100 | Up to 100 |

**Table 2. Formulations of Part A of the adhesive compositions not according to the invention (in gram)**

| | A-6 | A-7 | A-8 | A-9 | A-10 |
|---|---|---|---|---|---|
| Polyol (A) | 9.6 | 14 | - | - | - |
| Polyol (B) | 4.4 | - | 4.4 | 4.4 | 4.4 |
| PPG-2000 | - | - | 9.6 | - | - |
| CP-450 | - | - | - | 9.6 | - |
| Krasol LBH P 2000 | - | - | - | - | 9.6 |
| Chain extender | 1.12 | 1.12 | 1.12 | 1.12 | 1.12 |
| Aluminum oxide | 83.15 | 37.42 | 37.42 | 37.42 | 37.42 |
| Aluminum hydroxide | - | 45.73 | 45.73 | 45.73 | 45.73 |
| Catalyst | 0.06 | 0.06 | 0.06 | 0.06 | 0.06 |
| Reaction retarder | 0.08 | 0.08 | 0.08 | 0.08 | 0.06 |
| Additives | Up to 100 | Up to 100 | Up to 100 | Up to 100 | Up to 100 |

**Table 3. Formulations of Part B of the adhesive compositions according to the invention (in gram)**

| | B-1 | B-2 |
|---|---|---|
| Polyisocyanate 1 | 15.92 | - |
| Polyisocyanate 2 | - | 15.92 |
| Aluminum oxide | 37.42 | 37.42 |
| Aluminum hydroxide | 45.73 | 45.73 |
| Additives | Up to 100 | Up to 100 |

**Table 4. Formulations of the two-part adhesive compositions according to the invention (by weight)**

| | Ex. 1 | Ex. 2 | Ex. 3 | Ex. 4 | Ex. 5 | Ex. 6 | CE. 1 | CE. 2 | CE. 3 | CE. 4 | CE. 5 |
|---|---|---|---|---|---|---|---|---|---|---|---|
| Part A | A-1 | A-2 | A-3 | A-4 | A-5 | A-1 | A-6 | A-7 | A-8 | A-9 | A-10 |
| Part B | B-1 | B-1 | B-1 | B-1 | B-1 | B-2 | B-1 | B-1 | B-1 | B-1 | B-1 |
| Mixing ratio | 2:1 | 2:1 | 2:1 | 2:1 | 2:1 | 2:1 | 2:1 | 2:1 | 2:1 | 2:1 | 2:1 |

### Performance evaluation

### Flame retardency

To obtain samples for flame retardancy tests, the two-part adhesive composition was mixed and applied to achieve a thickness of 1 mm. This material was cured at ambient pressure and temperature for 7 days before 1 mm thick specimens were cut in the dimensions of 125 x 13 mm.

The flammability rating for 1 mm thick sample according to UL 94 fire test were evaluated and the results are shown in Table 5.

**Table 5. Testing results of flammability rating**

| | Ex. 1 | Ex. 2 | CE. 1 |
|---|---|---|---|
| Flammability rating | V0 | V0 | Fail |

### Thermal conductivity

To obtain samples for thermal conductivity tests, the two-part adhesive composition was mixed and applied to achieve a thickness of 1 mm. This material was cured at ambient pressure and temperature for 7 days before 1 mm thick circular specimens were cut with a diameter of 30 mm.

The thermal conductivity was tested according to ASTM D5470. The testing results are shown in Table 6.

**Table 6. Testing results of thermal conductivity**

| | Ex. 1 | Ex. 3 | Ex. 4 | Ex. 5 | Ex. 6 |
|---|---|---|---|---|---|
| Thermal conductivity [W/mK] | 1.30 | 1.10 | 1.13 | 1.12 | 1.10 |

### Lap shear strength, tensile strength and elongation at break

To obtain samples for tensile strength and elongation testing, the two-part adhesive composition was mixed and cured at ambient pressure and temperature for 7 days before specimens were cut as 5A testing specimens. The testing results are shown in Table 7.

The lap shear strength was tested according to ISO 4587-03. The tensile strength and elongation at break were tested according to ISO 527-2. The build-up strength was tested according to ISO 4587-03. The testing results are shown in Table 7.

**Table 7. Testing results of mechanical strength properties**

| | Ex. 1 | CE. 2 | CE. 3 | CE. 4 | CE. 5 |
|---|---|---|---|---|---|
| Lap shear strength (MPa) | 3.06 | 1.44 | 3.77 | 9.55 | 2.88 |
| Tensile strength (MPa) | 1.37 | 0.73 | 2.17 | 7.30 | 1.37 |
| Elongation at break (%) | 15.3 | 21.6 | 9.16 | 9.60 | 16.8 |

### Build-up strength

To obtain samples for testing the build-up strength, the two-part adhesive composition was mixed and applied to e-coated steel substrates to create lap-shear specimen with an overlap area of 15 x 25 mm and a gap of 1 mm. The samples were cured at ambient pressure and temperature for 1 hour before the lap-shear strength of the specimens were measured. Build-up strength was tested according to ISO 4587-03. The testing results are shown in Table 8.

**Table 8. Testing results of build-up strength**

| | Ex. 1 | Ex. 3 | Ex. 4 |
|---|---|---|---|
| Build-up strength (MPa, 60 min, RT) | 0.75 | 0.79 | 1.04 |

### Compression force

To measure the initial compression force of Part A (Compression Force A (MPa) @ 0.5 mm), a quantity of material sufficient to cover 40 mm diameter with a height of 5 mm was deposited on a lower plate and pressed by an upper stamp (diameter 40 mm) from 5 to 0.3 mm at a speed of 1 mm/s. The force corresponding to 0.5 mm thickness was recorded as the compression force. To obtain the curing compression force (Compression Force 2K (MPa, 10 min RT) @ 0.5 mm), the mixed adhesive composition was dispensed and measured as above described after 10 minutes of curing time had elapsed. The testing results are shown in Table 9.

**Table 9. Testing results of initial and curing compression force**

| | Ex. 1 | Ex. 3 | CE. 2 | CE. 4 | CE. 5 |
|---|---|---|---|---|---|
| Compression Force A (MPa) @ 0.5 mm | 0.24 | 0.21 | 0.19 | 0.15 | 0.56 |
| Compression Force 2K (MPa, 10 min RT) @ 0.5 mm | 0.35 | 0.32 | 0.24 | 0.23 | 1.47 |

As can be seen from Tables 5 to 9, the adhesive composition according to the present invention all achieved expected performance in terms of flame retardancy, thermal conductivity, mechanical strength and cycle rate after curing.

Nevertheless, Comparative Example 1 containing no aluminum hydroxide showed poor flame retardancy. Comparative Example 2 containing no polyol (B) having an average hydroxyl functionality of at least 3.0 and a weight average molecular weight of no larger than 3000 g/mol showed poorer lap shear strength and tensile strength. Comparative Examples 3 and 5 containing a lower molecular weight polyol instead of polyol (A) showed poorer elongation at break. Comparative Example 4 containing a lower molecular weight and higher functionality polyol instead of polyol (A) also showed poorer elongation at break. In addition, Comparative Example 5 containing a lower molecular weight polyol instead of polyol (A) could not achieve a good cycle rate in manufacturing as the compression force during curing increased rapidly.

## Claims

1. A thermally conductive adhesive composition comprising:
(a) at least one polyol (A) having an average hydroxyl functionality from at least 2.0 and a weight average molecular weight of larger than 3000 g/mol,
(b) at least one polyol (B) having an average hydroxyl functionality of at least 2.0 and a weight average molecular weight of no larger than 3000 g/mol,
(c) at least one chain extender,
(d) at least one catalyst,
(e) at least one reaction retarder,
(f) at least one isocyanate-terminated compound,
(g) at least one aluminum oxide, and
(h) at least one aluminum hydroxide.

2. The adhesive composition according to claim 1, wherein the polyol (A) is a polyether polyol, preferably having a weight average molecular weight of larger than 4000 g/mol.

3. The adhesive composition according to claim 1 or 2, wherein the polyol (B) is a polyether polyol and/or polyester polyol based on castor oil or soybean oil, preferably has a weight average molecular weight of no larger than 3000 g/mol.

4. The adhesive composition according to any of claims 1 to 3, wherein the isocyanate-terminated compound is selected from the group consisting of an aromatic polyisocyanate, an alicyclic polyisocyanate, an aliphatic polyisocyanate, and mixture thereof, and preferably is one or more aliphatic polyisocyanates.

5. The adhesive composition according to any of claims 1 to 4, wherein the chain extender is selected from the group consisting of 1,2-propanediol, 1,3-propanediol, 2-methyl-1,3-propanediol, 1,3-butanediol, 1,4-butanediol, 1,5-pentanediol, 3-methyl-1,5-prentanediol, 1,6-hexanediol, 1,9-nonanediol, ethylene glycol, polyethylene glycol, propylene glycol, polypropylene glycol, neopentyl glycol, polybutylene glycol, cyclohexane-1,2-diol, cyclohexane-1,4-diol, 1,4-bis(hydroxymethyl)cyclohexane, and mixture thereof.

6. The adhesive composition according to any of claims 1 to 5, wherein the catalyst is selected from tertiary amine compounds, organometallic compounds, and mixture thereof.

7. The adhesive composition according to any of claims 1 to 6, wherein the reaction retarder is selected from alky thiols, organic carboxylic acids, inorganic carboxylic acids, acid chlorides, inorganic acid salts, and mixture thereof.

8. The adhesive composition according to any of claims 1 to 9, wherein the adhesive composition is a one-part, two-part or multiple-part, and preferably a two-part adhesive composition.

9. The adhesive composition according to any of claims 1 to 8, wherein the adhesive composition is a two-part adhesive composition consisting of:
part (A) comprising:
(a) at least one polyol (A) having an average hydroxyl functionality of at least 2.0and a weight average molecular weight of larger than 3000 g/mol,
(b) at least one polyol (B) having an average hydroxyl functionality of at least 2.0 and a weight average molecular weight of no larger than 3000 g/mol,
(c) at least one chain extender,
(d) at least one catalyst, and
(e) at least one reaction retarder, and
part (B) comprising:
(f) at least one isocyanate-terminated compound,
in which part (A) and/or part (B) further comprises:
(g) at least one aluminum oxide, and
(h) at least one aluminum hydroxide.

10. A method for the manufacturing of an adhesive composition according to claim 9, comprising:
a) providing part (A) and part (B); and
b) mixing the component A and the component B to obtain the adhesive composition.

11. A cured adhesive product obtainable by curing an adhesive composition according to any of claims 1 to 9.

12. An article comprising the adhesive composition according to any of claims 1 to 9 or the cured adhesive product according to claim 11.

13. A method of manufacturing an article comprising at least two bonded substrates, comprising
i) applying the adhesive composition according to any of claims 1 to 9 onto the surface of a first substrate to be bonded; and
ii) bringing the surface of the first substrate to be bonded comprising the adhesive composition into contact with a second substrate to be bonded.
